# EUROPEAN PATENT SPECIFICATION

(11) **EP 3 024 706 B1**
(45) Date of publication and mention of the grant of the patent: **19.02.2020**
(21) Application number: 13739450.8
(22) Date of filing: 22.07.2013
(51) Int. Cl.: B60S 1/34, B60S 1/52

(54) **WINDSCREEN WIPER DEVICE**
SCHEIBENWISCHERVORRICHTUNG
DISPOSITIF ESSUIE-GLACE

(43) Date of publication of application: 01.06.2016
(73) Proprietor: Federal-Mogul S.A., 6790 Aubange (BE)
(72) Inventor: FRISCIONI, Thomas, F-54135 Mexy (FR)
(74) Representative: Hooiveld, Arjen Jan Winfried
(86) International application number: PCT/EP2013/065443
(87) International publication number: WO 2015/010719

(56) References cited:
- EP-A2- 0 207 364
- DE-A1-102005 036 014
- DE-A1-102005 045 410
- KR-A- 20120 050 107

## Description

The present invention relates to a windscreen wiper device, particularly for automobiles, comprising an elongated wiper blade of a flexible material, which can be placed in abutment with a windscreen to be wiped, said wiper blade comprising a connecting device for an oscillating arm, wherein said oscillating arm near one end thereof is pivotally connected to said wiper blade and near the other end thereof is connected to a mounting head on a drive shaft for transferring a reciprocal movement to said wiper blade, wherein said windscreen wiper device further comprises a cap connected to said mounting head at the location where said oscillating arm is connected to said mounting head, wherein said drive shaft is arranged to spray a liquid under pressure through an opening of said cap onto a windscreen to be wiped.

Such a windscreen wiper device is generally known. In the known windscreen wiper device in a midway position of said wiper blade said drive shaft is arranged to spray a jet of washing liquid laterally outwardly through said opening of said cap onto a windscreen to be wiped. As the washing liquid is sprayed onto the windscreen to be wiped in a position of the wiper blade halfway its oscillatory movement, the washing liquid is not able to cover the entire windscreen to be wiped, so that the windscreen cannot be sufficiently cleaned, if needed. Said opening in the cap is required to be sufficiently large to enable the washing liquid to reach the windscreen to be wiped, resulting in a less attractive design thereof. As the washing liquid is sprayed laterally outwardly relative to the drive shaft, said cap needs to have a sufficient height so to allow the washing liquid to reach the windscreen to be wiped, said height negatively influences the visibility from the drivers point of view, while it may give rise to damages in a car wash installation.

DE 10 2005 045410 A1 discloses a windscreen wiper device according to the preamble of claim 1.

It is an object of the invention to obviate these disadvantages in the sense that at minimum costs - without using complex machinery and additional tools - a compact windscreen wiper device is proposed for efficiently cleaning a windscreen to be wiped.

It is noted that the present invention is not restricted to cars, but also refers to rail coaches and other (fast) vehicles.

In order to accomplish that objective a windscreen wiper device mentioned in the preamble is characterized in that said drive shaft is arranged to spray said liquid in axial direction thereof onto an internal guiding surface of said cap in order to guide said liquid along said guiding surface through said opening of said cap onto a windscreen to be wiped. In other words, the cap and the drive shaft cooperate together so as to allow the fluid exiting the drive shaft in an axial direction thereof and subsequently hitting the guiding surface of the cap, to go through the opening of the cap and cover the windscreen to be wiped wherein said guiding surface is part of the top surface of said cap.

In a further preferred embodiment of a windscreen wiper device according to the invention said top surface has a curved shape so as to allow said liquid to exit said opening of said cap under an angle α with the drive shaft towards a windshield to be wiped. Particularly, an end portion of said curved shape encloses an angle α with the drive shaft. More in particular, said angle α is lying with the range of 10-30°.

In a further preferred embodiment of a windscreen wiper device in accordance with the invention said guiding surface is part of side surface of said cap.

In a further preferred embodiment of a windscreen wiper device according to the invention said side surface has a curved shape so as to allow said liquid to exit said opening of said cap under an angle β with the drive shaft and parallel to said wiper blade. In particular, an end portion of said curved shape encloses an angle β with the drive shaft. Preferably, said angle β is lying with the range of 10-30°.

The present windscreen wiper device is preferably arranged to be used on a rear windscreen.

The present invention also relates to a drive shaft to be used and as defined in a windshield wiper device in accordance with the invention.

The present invention also refers to a cap to be used and as defined in a windshield wiper device according to the invention.

Particularly, the windscreen wiper device in accordance with the invention comprises an elastic, elongated carrier element, as well as an elongated wiper blade of a flexible material, which can be placed in abutment with a windscreen to be wiped, which wiper blade includes at least one longitudinal groove, in which groove a longitudinal strip of the carrier element is disposed, wherein ends of said longitudinal strip are connected with a respective connecting piece, which windscreen wiper device comprises a connecting device for an oscillating arm. Such a windscreen wiper device is thus designed as a "yokeless" wiper device or "flat blade", wherein use is no longer made of several yokes pivotally connected to each other, but wherein the wiper blade is biased by the carrier element, as a result of which it exhibits a specific curvature. It is noted that the present invention is not restricted to such a "flat blade", although being advantageous therein, but also extends to other types of windscreen wiper devices, such as the ones with yokes as referred to above.

The invention will now be explained in more detail with reference to figures illustrated in a drawing, wherein:
- figures 1 and 2 are perspective and schematic views of (details of) a prior art windscreen wiper device, wherein an oscillating arm near one end thereof is pivotally connected to a wiper blade and near the other end thereof is connected to a mounting head on a drive shaft for transferring a reciprocal movement to said wiper blade, and wherein said drive shaft is arranged to spray a liquid jet directly onto a windscreen to be wiped;
- figure 3 relates to a perspective and schematic view of a windscreen wiper device according to the invention;
- figure 4 shows a perspective and schematic view of a mounting head on a drive shaft spraying a liquid jet in the windscreen wiper device of figure 3 and in the windscreen wiper device (referring to the present invention) of figure 2 (relating to the prior art);
- figures 5 depicts schematic cross-sectional view of the windscreen wiper device of figure 3 at the location of a mounting on a drive shaft thereof; and
- figure 6 is a top view, partly in cross-section, of the windscreen wiper device of figure 3.

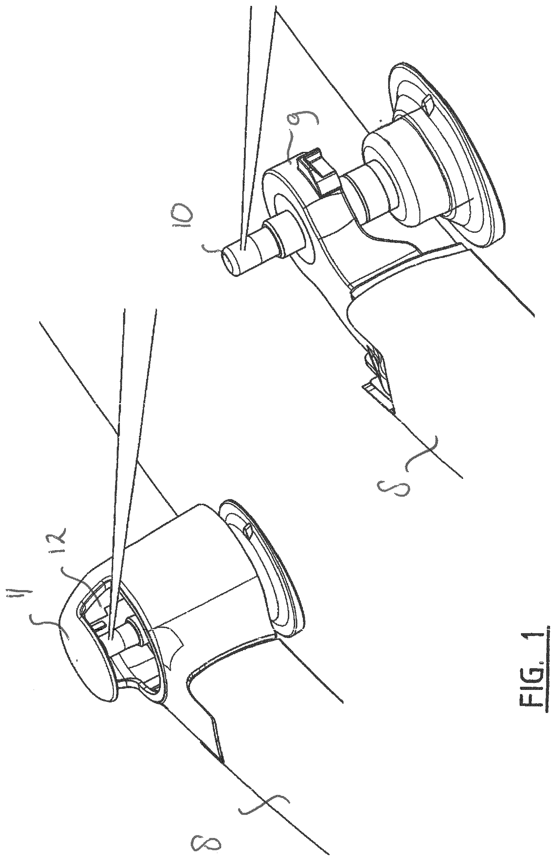

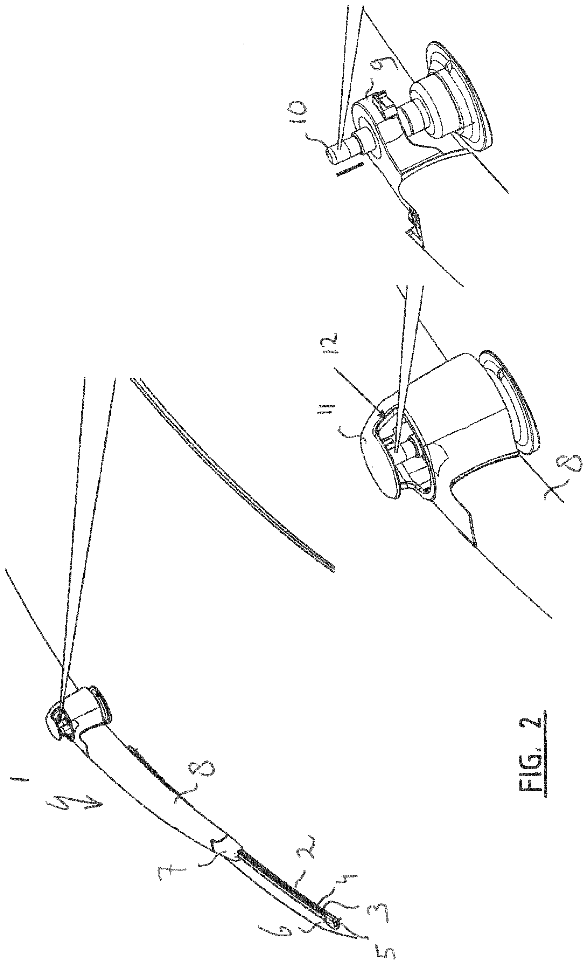

With reference to figures 1 and 2 relating to the prior art a windscreen wiper device 1 of a so-called "flat blade" type is shown. Said windscreen wiper device 1 is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the wiper blade 2, as it were, which is thus biased in a curved position (the curvature in operative position being that of a windscreen to be wiped). Neighboring ends 5 of the strips 4 at one end of said wiper blade 2 are interconnected by means of a connecting piece 6 or "end cap" functioning as clamping member. In this embodiment, the connecting piece 6 is a separate constructional element, which may be form-locked ("positive locking" or "having a positive fit") or force-locked to the ends 5 of the strips 4. In another preferred embodiment, said connecting piece 6 is in one piece with the strips 4 made of spring band steel. In the latter case said connecting piece 6 forms a transverse bridge for the strips 4, as it were.

The windscreen wiper device 1 is furthermore built up of a connecting device 7 of plastic material for an oscillating 8. Alternatively, the connecting device 7 may also be made of metal, such as steel or aluminum. The connecting device 7 may comprise clamping members that are integral therewith, which engage around longitudinal sides of the strips 4 that face away from each other, as a result of which the connecting device 7 is firmly attached to the unit consisting of the wiper blade 2 and the strips 4. The oscillating arm is pivotally connected to said wiper blade 2.

As illustrated in figures 1 and 2, the windscreen wiper device 1 according to the prior art comprises a plastic or metallic mounting head 9 which can be fixed for rotation to a shaft 10 driven, via a mechanism not illustrated, by a small motor. In use, the shaft 10 rotates alternately in a clockwise and in a counter-clockwise sense carrying the mounting head 9 into rotation also, which in turn draws the oscillating arm 8 in rotation and thereby moves the wiper blade 2.

The windscreen wiper device 1 further comprises a plastic or metallic cap or cover 11 with an opening 12 being connected to said mounting head 9 at the location where said oscillating arm 8 is connected to said mounting head 9. In a midway position of said wiper blade 2 said drive shaft 10 is arranged to spray a jet of washing liquid laterally outwardly through said opening 12 of said cap 11 onto a windscreen to be wiped.

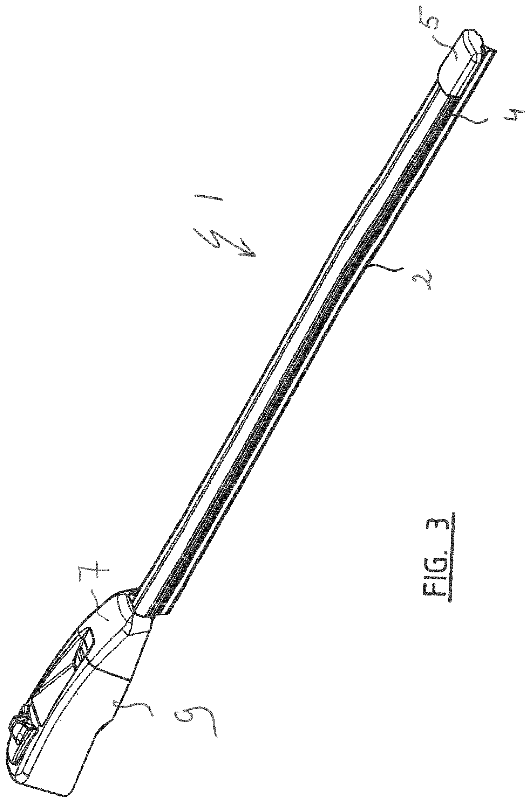

Figure 3 relates to a perspective and schematic view of a windscreen wiper device according to a preferred embodiment of the invention, wherein corresponding parts have been designated with the same reference numerals. Please note that in the preferred embodiment no use is made of an intermediate oscillating arm, but the connecting device 7 is directly connected to the mounting head 9 with the help of a so-called bayonet connection.

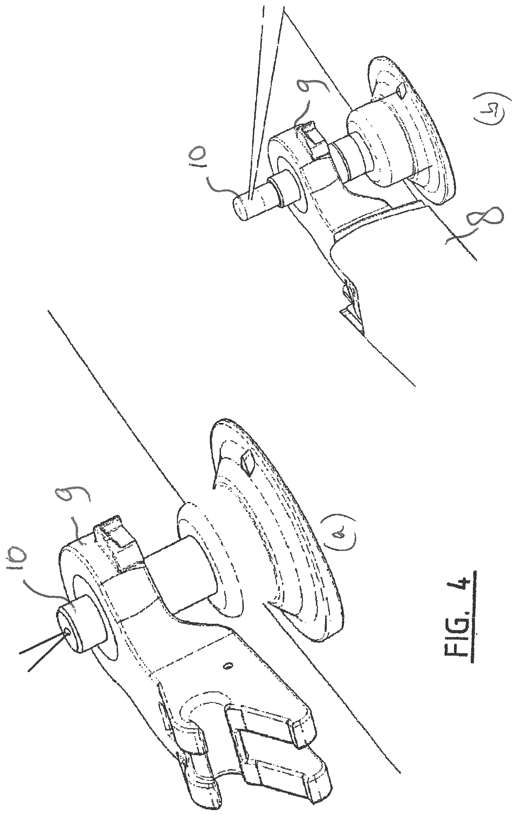

As shown in figure 4a, said drive shaft 10 in the windscreen wiper device 1 according to the invention is arranged to spray a washing liquid in axial direction thereof instead of in lateral outward direction according to the prior art (figure 4b).

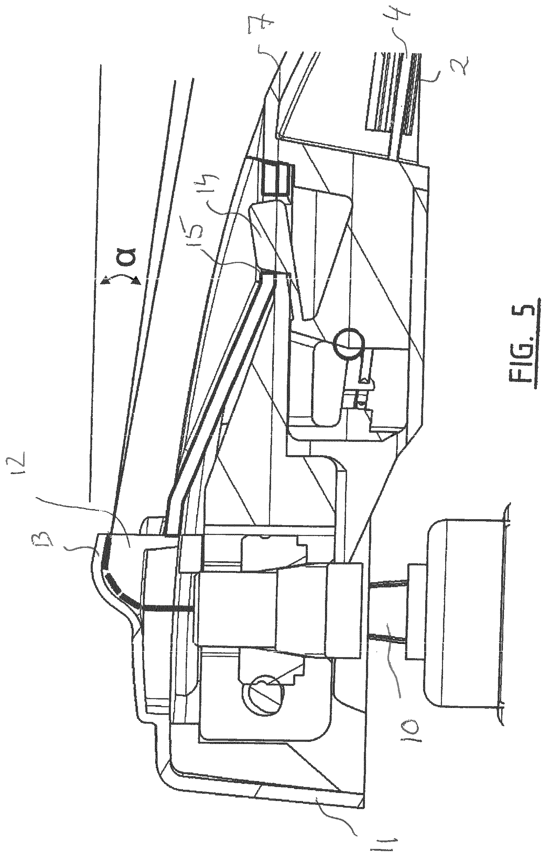

As depicted in figure 5 said liquid leaving said shaft 10 in axial direction thereof is sprayed onto an internal guiding surface 13 of said cap 11 in order to guide said liquid along said guiding surface 13 through said opening 12 of said cap 11 onto a windscreen to be wiped.

The connecting device 7 with the wiper blade 2 is mounted onto the mounting head 9 as follows. During a sliding movement of the connecting device 7 onto the mounting head 9 the resilient tongue in the connecting device 7 is initially pushed in against a spring force and then allowed to spring back into a hole 15 in said mounting head 9, thus snapping, that is clipping the resilient tongue 14 into the hole 15 of the mounting head 9. This is a so-called bayonet-connection. By subsequently pushing in again said resilient tongue 19 against the spring force (as if it were a push button), the connecting device 7 together with the wiper blade 2 may be released from the mounting head 9. Dismounting the connecting device 7 with the wiper blade 2 from the mounting head 9 is thus realized by sliding the connecting device 7 together with the wiper blade 2 in a direction away from the mounting head 9.

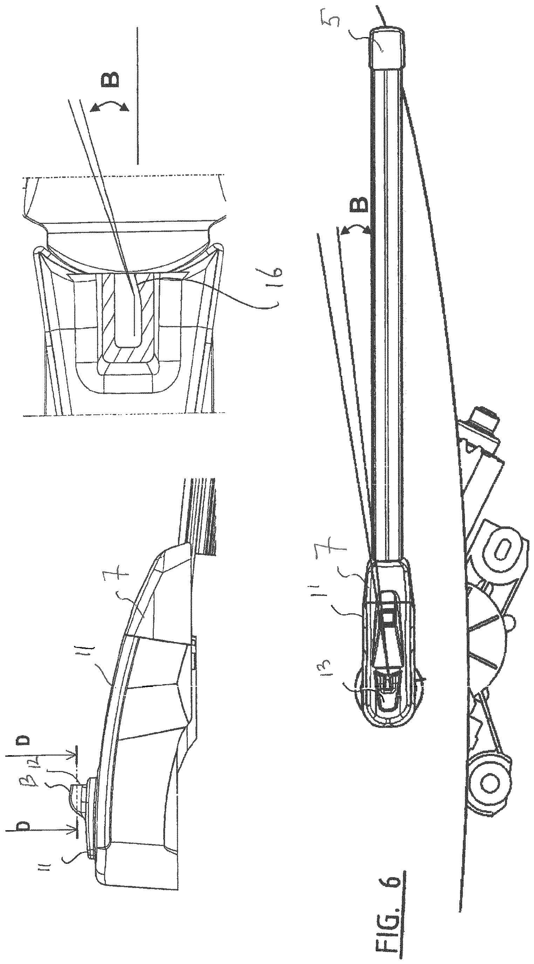

With reference to figure 6 said guide surface (13) is part of a side surface (16) of said cap (4) so as to allow said liquid to exit said opening (12) of said cap (4) under an angle β relative to the drive shaft (10) and parallel to said wiper blade (2).

The invention is not limited to the embodiments shown, but extends also to other preferred variants falling within the scope of the appended claim.

## Claims

1. A windscreen wiper device (1), particularly for automobiles, comprising an elongated wiper blade (2) of a flexible material, which can be placed in abutment with a windscreen to be wiped, said wiper blade (2) comprising a connecting device (7) for an oscillating arm (8), wherein said oscillating arm (8) near one end thereof is pivotally connected to said wiper blade (2) and near the other end thereof is connected to a mounting head (9)on a drive shaft (10) for transferring a reciprocal movement to said wiper blade (2), wherein said windscreen wiper device (1) further comprises a cap (11) connected to said mounting head (9)at the location where said oscillating arm (8) is connected to said mounting head (9), wherein said drive shaft(10) is arranged to spray a liquid under pressure through an opening (12) of said cap (11) onto a windscreen to be wiped, wherein said drive shaft (10) is arranged to spray said liquid in axial direction thereof onto an internal guiding surface (13) of said cap (11) in order to guide said liquid along said guiding surface (13) through said opening (12) of said cap (11) onto a windscreen to be wiped **characterised in that** said guiding surface (13) is part of the top surface of said cap (11).

2. A. windscreen wiper device (1) according to claim 1, wherein said top surface has a curved shape so as to allow said liquid to exit said opening (12) of said cap (11) under an angle α with the drive shaft (10) and towards a windscreen to be wiped.

3. A windscreen wiper device (1) according to claim 2, wherein an end portion of said curved shape encloses an angle α with the drive shaft (10).

4. A windscreen wiper device (1) according to claim 2 or 3, wherein said angle α is lying with the range of 10-30°.

5. A windscreen wiper device (1) according to any of the preceding claims 1 through 4, wherein said guiding surface (13) is part of side surface (16) of said cap (11).

6. A windscreen wiper device (1) according to claim 5, wherein said side surface has a curved shape so as to allow said liquid to exit said opening (12) of said cap (11) under an angle β with the drive shaft (10) and parallel to said wiper blade (2).

7. A windscreen wiper device (1) according to claim 2, wherein an end portion of said curved shape encloses an angle β with the drive shaft (10).

8. A windscreen wiper device (1) according to claim 2 or 3, wherein said angle β is lying with the range of 10-30°.

## Patentansprüche

1. Scheibenwischervorrichtung (1), insbesondere für Kraftfahrzeuge, umfassend ein längliches Wischerblatt (2) aus einem flexiblen Material, das in Angrenzung mit einer zu wischenden Windschutzscheibe platziert werden kann, wobei das Wischerblatt (2) eine Verbindungsvorrichtung (7) für einen sich hin und her bewegenden Arm (8) umfasst, wobei der sich hin und her bewegende Arm (8) nahe einem Ende davon schwenkbar mit dem Wischerblatt (2) verbunden ist und nahe dem anderen Ende davon mit einem Montagekopf (9) auf einer Antriebswelle (10) verbunden ist zum Übertragen einer wechselseitigen Bewegung auf das Wischerblatt (2), wobei die Scheibenwischervorrichtung (1) ferner eine Kappe (11) umfasst, verbunden mit dem Montagekopf (9) an der Stelle, an der der sich hin und her bewegenden Arm (8) mit dem Montagekopf (9) verbunden ist, wobei die Antriebswelle (10) angeordnet ist, um eine Flüssigkeit unter Druck durch eine Öffnung (12) der Kappe (11) auf eine zu wischende Scheibe zu sprühen, wobei die Antriebswelle (10) angeordnet ist, die Flüssigkeit in axialer Richtung davon auf ein innere Führungsoberfläche (13) der Kappe (11) zu sprühen, um die Flüssigkeit entlang der Führungsoberfläche (13) durch die Öffnung (12) der Kappe (11) auf eine zu wischende Scheibe zu führen, **dadurch gekennzeichnet, dass** die Führungsoberfläche (13) Teil der oberen Oberfläche der Kappe (11) ist.

2. Scheibenwischervorrichtung (1) nach Anspruch 1, wobei die obere Oberfläche eine gekrümmte Form aufweist, um der Flüssigkeit zu ermöglichen, aus der Öffnung (12) der Kappe (11) auszutreten unter einem Winkel a mit der Antriebswelle (10) und in Richtung einer zu wischenden Scheibe.

3. Scheibenwischervorrichtung (1) nach Anspruch 2, wobei ein Endabschnitt der gekrümmten Form einen Winkel a mit der Antriebswelle (10) einschließt.

4. Scheibenwischervorrichtung (1) nach Anspruch 2 oder 3, wobei der Winkel a im Bereich von 10-30° liegt.

5. Scheibenwischervorrichtung (1) nach einem der vorhergehenden Ansprüche 1 bis 4, wobei die Führungsoberfläche (13) Teil der Seitenoberfläche (16) der Kappe (11) ist.

6. Scheibenwischervorrichtung (1) nach Anspruch 5, wobei die Seitenoberfläche eine gekrümmte Form aufweist, um der Flüssigkeit zu ermöglichen, aus der Öffnung (12) der Kappe (11) auszutreten unter einem Winkel β mit der Antriebswelle (10) und parallel zu dem Wischerblatt (2).

7. Scheibenwischervorrichtung (1) nach Anspruch 2, wobei ein Endabschnitt der gekrümmten Form einen Winkel β mit der Antriebswelle (10) einschließt.

8. Scheibenwischervorrichtung (1) nach Anspruch 2 oder 3, wobei der Winkel β im Bereich von 10-30° liegt.

## Revendications

1. Dispositif d'essuie-glace (1), destiné plus particulièrement à des automobiles, qui comprend un balai d'essuie-glace allongé (2) en matériau souple, qui peut être placé en butée avec un pare-brise à nettoyer, ledit balai d'essuie-glace (2) comprenant un dispositif de raccordement (7) destiné à un bras oscillant (8), dans lequel ledit bras oscillant (8), près d'une extrémité de celui-ci, est relié de manière pivotante audit balai d'essuie-glace (2) et, près de l'autre extrémité de celui-ci, est relié à une tête de fixation (9) sur un arbre d'entraînement (10) destiné à transférer un mouvement de va-et-vient audit balai d'essuie-glace (2), dans lequel ledit dispositif d'essuie-glace (1) comprend en outre un embout (11) relié à ladite tête de fixation (9) à l'emplacement auquel ledit bras oscillant (8) est relié à ladite tête de fixation (9), dans lequel ledit arbre d'entraînement (10) est prévu afin de pulvériser un liquide sous pression par une ouverture (12) dudit embout (11) sur un pare-brise destiné à être nettoyé, dans lequel ledit arbre d'entraînement (10) est prévu afin de pulvériser ledit liquide dans une direction axiale de celui-ci sur une surface de guidage interne (13) dudit embout (11) afin de guider ledit liquide le long de ladite surface de guidage (13) par ladite ouverture (12) dudit embout (11) vers un pare-brise destiné à être nettoyé, **caractérisé en ce que** ladite surface de guidage (13) fait partie de la surface supérieure dudit embout (11).

2. Dispositif d'essuie-glace (1) selon la revendication 1, dans lequel ladite surface supérieure possède une forme incurvée afin de permettre audit liquide de sortir de ladite ouverture (12) dudit embout (11) à un angle α avec l'arbre d'entraînement (10) et vers un pare-brise destiné à être nettoyé.

3. Dispositif d'essuie-glace (1) selon la revendication 2, dans lequel une partie d'extrémité de ladite forme incurvée comprend un angle α avec l'arbre d'entraînement (10).

4. Dispositif d'essuie-glace (1) selon la revendication 2 ou 3, dans lequel ledit angle α est compris entre 10° et 30°.

5. Dispositif d'essuie-glace (1) selon l'une quelconque des revendications 1 à 4, dans lequel ladite surface de guidage (13) fait partie d'une surface latérale (16) dudit embout (11).

6. Dispositif d'essuie-glace (1) selon la revendication 5, dans lequel ladite surface latérale possède une forme incurvée afin de permettre audit liquide de sortir de ladite ouverture (12) dudit embout (11) à un angle β avec l'arbre d'entraînement (10) et parallèlement audit balai d'essuie-glace (2).

7. Dispositif d'essuie-glace (1) selon la revendication 2, dans lequel une partie d'extrémité de ladite forme incurvée comprend un angle β avec l'arbre d'entraînement (10).

8. Dispositif d'essuie-glace (1) selon la revendication 2 ou 3, dans lequel ledit angle β est compris entre 10° et 30°.
